# EUROPÄISCHE PATENTSCHRIFT

(11) **EP 2 934 766 B1**
(45) Veröffentlichungstag und Bekanntmachung des Hinweises auf die Patenterteilung: **19.07.2017**
(21) Anmeldenummer: 13814525.5
(22) Anmeldetag: 19.12.2013
(51) Int. Cl.: G10K 11/16, B05D 1/26, B05D 3/06, B05D 1/42, B05D 3/02, D06F 39/12, G10K 11/162, A47L 15/42

(54) **VERFAHREN ZUM SCHALLDÄMMEN UND/ODER SCHALLISOLIEREN VON BAUTEILEN**
METHOD FOR THE SOUND DAMPING AND/OR SOUND INSULATION OF COMPONENTS
PROCÉDÉ D'ISOLATION ACOUSTIQUE ET/OU D'INSONORISATION D'ÉLÉMENTS STRUCTURAUX

(30) Priorität: 19.12.2012 DE 102012223757
(43) Veröffentlichungstag der Anmeldung: 28.10.2015
(73) Patentinhaber: Henkel AG & Co. KGaA, 40589 Düsseldorf (DE)
(72) Erfinder: SCHENZLE, Bernd, 69121 Heidelberg (DE); GIESINGER, Josef, 69214 Eppelheim (DE); HUDINA, Jozef, 68775 Ketsch (DE)
(86) Internationale Anmeldenummer: PCT/EP2013/077281
(87) Internationale Veröffentlichungsnummer: WO 2014/096125

(56) Entgegenhaltungen:
- EP-A1- 1 582 268
- WO-A1-2010/055468
- DE-A1- 3 503 984
- DE-A1-102007 029 644
- US-A1- 2009 042 055

## Beschreibung

Die vorliegende Erfindung betrifft ein Verfahren zum Schalldämmen und/oder Schallisolieren von metallischen Bauteilen und / oder Kunststoffbauteilen.

Bei der Herstellung von modernen Geräten, Apparaten und Maschinen werden heutzutage fast ausschließlich sehr dünnwandige metallische Bleche oder Kunststoffbauteile eingesetzt. Mechanisch sich bewegende Teile, Wasch- und Spülvorgänge oder laufende Motoren versetzen diese dünnwandigen Bleche oder Kunststoffbauteile unvermeidbar in Schwingungen, die vielfach im Hörbereich des menschlichen Ohres sind. Diese Schwingungen werden in Form von Körperschall über die gesamte Maschine, den Apparat oder das Gerät fortgeleitet und können an entfernten Stellen in die Luft als störender Schall abgestrahlt werden. Zur Reduzierung der Schallabstrahlung und zur Körperschalldämpfung werden diese Bleche oder Kunststoffbauteile daher zum Beispiel im Automobilbau oder bei der Herstellung von Haushaltsgeräten mit schalldämpfenden Belägen, sogenannten Antidröhnbeschichtungen, versehen.

Nach herkömmlicher Verfahrensweise werden dabei Mischungen aus Füllstoffen mit hohem spezifischen Gewicht und Bitumen zu Folien extrudiert, aus denen dann die entsprechenden Formteile gestanzt oder geschnitten werden. Anschließend werden diese Folien auf die betreffenden Blechteile geklebt, wobei sie ggf. noch unter Erwärmen an die Form des Bleches angepasst werden müssen.

Gemäß der Lehre der EP2407079 A2 wird zur Herstellung einer Geschirrspülmaschine eine vorkonfektionierte Bitumenmatte auf wenigstens ein Bauteil aufgeklebt, indem ein gebrauchsfähiges, fließfähiges und reaktiv aushärtungsfähiges bituminöses Gemisch derart auf das Bauteil und/oder auf die Bitumenmatte aufgebracht wird, dass wenigstens eine, vorzugsweise langgestreckte, insbesondere linienförmige oder strangförmige, Klebewulst entsteht, die zumindest teilweise von wenigstens einem unbeaufschlagten, d.h. von reaktiver Bitumenmasse frei bleibendem, Bereich umrandet ist, und indem vor dem Aushärten des bituminösen Gemisches das Bauteil und die Bitumenmatte zusammengedrückt werden.

Obwohl diese Bitumen-Folien aufgrund ihres geringen Materialpreises noch häufig Anwendung finden, sind sie sehr spröde und neigen insbesondere bei tiefen Temperaturen zum Abplatzen von Blech. Auch die vielfach vorgeschlagenen Zusätze von Elastomeren ergeben nur eine geringfügige Verbesserung, die für viele Anwendungen unzureichend ist. Des weiteren ist das Aufbringen der vorgeformten Bitumenteile auf kompliziert geformte oder schwer zugängliche Blechteile von Maschinen oder Fahrzeugen überhaupt nicht möglich. Als weiterer Nachteil kommt hinzu, dass für eine einzige Maschine oder ein einziges Gerät in vielen Fällen mehrere Stanzteile benötigt werden, wodurch eine aufwendige Lagerhaltung erforderlich ist.

EP 0766714 A beschreibt Plastisol-Zusammensetzungen auf der Basis von Vinylchlorid-Vinylacetat-Copolymeren, die nach dem Suspensions-Polymerisationsverfahren hergestellt wurden. Diese Plastisol-Zusammensetzungen haben selbst bei niedrigem Polymer-Weichmacher-Verhältnis eine niedrige Viskosität, so dass diese airless spritzbar sind und gut gelierfähig sind. Die Schrift offenbart weiterhin, dass Beschichtungen auf Basis der genannten Plastisole gute geräuschdämpfende Wirkung zeigen. In dieser Schrift wird vorgeschlagen, diese Plastisole im Unterbodenbereich von Kraftfahrzeugen, einschließlich der Radkästen zur körperschalldämpfenden Beschichtung und zum Korrosionsschutz und Schutz vor Abrieb einzusetzen.

In ähnlicher Weise beschreibt die EP 702708 A schalldämpfende Beschichtungen für Bleche im Unterbodenbereich von Kraftfahrzeugen auf der Basis von Plastisolen bestehend aus 5 bis 60 Gew. % mindestens eines pulverförmigen Styrol-Copolymeren oder Methylmethacrylat-Homopolymeren oder Copolymeren des Methylmethacrylates, 5 bis 65 Gew. % Weichmacher, 0 bis 40 Gew. % Füllstoffe, 2 bis 40 Gew. % reaktiven Zusätzen und gegebenenfalls weiteren Zusatzstoffen. Nach dieser Schrift eignen sich die dort beschriebenen Plastisolformulierungen zur Herstellung abriebfester, einschichtiger, im Spritzverfahren aufbringbaren Belege auf Bleche, insbesondere im Unterbodenbereich von Kraftfahrzeugen zur Reduktion der durch Aufprallen der Teilchen hervorgerufenen Geräusche, zum Korrosionsschutz und zur Erzielung einer abriebfesten Beschichtung.

WO 91/05819 beschreibt thermoplastische Massen zur Verwendung als schalldämpfende und vibrationsisolierende, laminierte oder Schichtkörper, insbesondere für Motorfahrzeuge. Die thermoplastischen Massen sollen 0,6 bis 50 % chloriertes Polyethylen, 20 bis 95 % Füllstoffe und 4 bis 60 % mit dem chlorierten Polyethylen verträglichen Weichmacher enthalten. Es wird angegeben, dass diese thermoplastischen Zusammensetzungen als Schichtmaterial in Motorfahrzeugen, Gebäuden, Haushaltsgeräten und industriellen Maschinen zur Schalldämpfung und Vibrationsisolation eingesetzt werden können.

US 2009/0042055 A1 befasst sich mit einem Verfahren und einer Vorrichtung zur Oberflächenvorbereitung und zweifachen Pofymerbeschichtung von starren Blechen, um die Haftung der starren Bleche während des kontinuierlichen Herstellungsprozesses zu verbessern. Dabei werden die thermoplastischen Polymeren direkt auf starre Bleche bei Temperaturen oberhalb der Schmelztemperatur extrudiert, wobei die Beschichtung nicht als schallisolierend deklariert ist.

EP 1 582 268 A1 bezieht sich auf ein Verfahren zum Aufbringen eines aktivierbaren Materials, wobei das aktivierbare Material je nach der beabsichtigten Verwendung zum Zweck der Haftung, Versteifung, Schallabsorption und/oder Schwingungsdämpfung eingesetzt wird. Dabei kann das aufzutragende Material in fester oder vorzugsweise in flüssiger Form vorliegen und die Auftragung erfolgt unterhalb der Aktivierungstemperatur (unterhalb von etwa 120 °C), so dass die Aufblähung und die Abreaktion erst später erfolgen.

DE 10 2007 029644 A1 betrifft eine ein-komponentige, heißhärtende reaktive Zusammensetzung auf der Basis von natürlichen und/oder synthetischen olefinische Doppelbindungen enthaltenden Elastomeren und Vulkanisationsmitteln sowie deren Verwendung als ein-komponentiger Klebstoff, Dichtstoff, Beschichtungsmasse oder Versteifungsmasse im Automobilrohbau, Schienenverkehr oder Weiße Ware. Dabei enthält die Zusammensetzung thermoplastische Polymere und kann in Extruder hergestellt werden.

Aus der WO2006/076958 A1 sind spritzbare, niedrigviskose Kautschukdämpfungsmassen auf der Basis von flüssigen Kautschuken oder Elastomeren und Vulkanisationsmitteln bekannt, die geringe Mengen an strukturverstärkenden Faserfüllstoffen enthalten, sie sollen sich durch Abwesenheit von bisher üblichen Festkautschuken auszeichnen und haben eine sehr niedrige Viskosität im Applikationszustand. Derartige Akustikmassen sind mit Hilfe von vollautomatischen Applikationsanlagen spritzbar und werden vorzugsweise im Fahrzeugbau im Rohbau verarbeitet.

Die langen Verweilzeiten bei hohen Temperaturen in den dem Rohbau nachfolgenden Lackierstrassen des Automobilbaus stehen im normalen Maschinen-, Apparate- und Gerätebau jedoch nicht zur Verfügung. Es besteht also Bedarf, auch für diese Anwendungsfelder ein Verfahren bereitzustellen, bei dem spritz- oder vor Ort extrudierbare Produkte in sehr kurzen Taktzeiten applizierbar sind, so dass die Lagerhaltung vor Ort vereinfacht wird.

Die erfindungsgemäße Lösung der Aufgabe ist den Patentansprüchen zu entnehmen. Sie besteht im wesentlichen in der Bereitstellung eines Verfahrens zum Schalldämmen und/oder Schallisolieren ("Entdröhnen") von metallischen Bauteilen und / oder Kunststoffbauteilen bei dem thermoplastische Compounds durch direkte Extrusion bei Schmelzetemperaturen zwischen 120 und 300° C auf die Bauteile als definiertes Profil aufgebracht werden, wobei die Compounds vor der Erwärmung in Granulatform mit einer Dichte von 1,5 bis 5 g/cm³ vorliegen.

Metallische Bauteile sind vorzugsweise dünnwandige Bleche aus Stahl, Aluminium und insbesondere Edelstahl. Kunststoffbauteile können beispielsweise aus dünnwandigen PVC-, Polycarbonat-, Polypropylen-, Acrylnitril-Butadien-Styrol- (ABS-) Polymeren oder Glasfaser-verstärkten Kunstoffen (GFK) bestehen. Kunststoffplatten können bevorzugte Bauteile sein.

Das erfindungsgemäße Verfahren kann vorzugsweise überall dort eingesetzt werden, wo die langen Verweilzeiten bei hohen Temperaturen in den Lackierstrassen des Automobilbaus nicht zur Verfügung stehen.

Diese zu beschichtenden Bauteile können dabei Bestandteil von so genannter "weißer Ware", d. h. von Haushaltsgeräten oder Haushaltsmaschinen wie Geschirrspüler, Waschmaschinen, oder von Badewannen, Duschwannen, Duschtassen oder Spülbecken sein. Sie können aber auch Bestandteil von Datenverarbeitungsgeräten (Computern), Pumpengehäusen, Kompressoren, landwirtschaftlichen Fahrzeugen und Geräten, medizinischen Geräten oder Gehäusekanzeln von Windenergieanlagen sein.

Das Granulat (auch Pellets genannt) kann einen Korndurchmesser von 0,5 mm bis 30 mm vorzugsweise von 2 bis 10 mm haben. Die Korngröße kann dabei z. B. durch Siebanalyse bestimmt werden. Vorzugsweise hat das Korn eine kugelartige oder linsenförmige Form, sie kann aber auch elliptisch oder zylinderförmig sein. Vorzugsweise sollen die Granulatteilchen oberflächlich kleb- bzw. blockfrei frei sein, damit ein Zusammenkleben zu größeren Aggregaten bei Lagerung und Förderung des Granulats vermieden wird.

Thermoplastische Compounds im Sinne dieser Erfindung sind Gemische aus sortenreinen thermoplastischen Polymeren, denen zusätzlich Füllstoffe, ggf. Verstärkungsstoffe und / oder andere Additive beigemischt worden sind. Dabei haben die Compounds vor der Erwärmung in Granulatform eine Dichte von 1,5 bis 5 g/cm³. Die angegebene Dichte soll somit der Dichte bei Raumtemperatur, vorzugsweise bei 20°C entsprechen. Um eine hohe Dichte der thermoplastischen Compounds zu erzielen, sollen diese hoch gefüllt sein, das heißt einen Füllstoffanteil von mindestens 60 Gew.% haben.

Beispiele für zu verwendende thermoplastische Polymere sind Vinylpolymere, insbesondere Ethylenvinylacetat (EVA), Polyolefine, Polyamide (PA), Polyester, Polyacetale, Polycarbonate, Polyurethane, lonomere oder auch Bitumen. Gegebenenfalls könne auch Mischungen von den vorgenannten sortenreinen thermoplastischen Polymeren eingesetzt werden. Besonders bevorzugt sind dabei EVA, PA oder deren Mischungen.

Als Füllstoffe dienen anorganische Salze oder Oxide, vorzugsweise solche mit einer hohen Dichte zwischen 2,5 und etwa 12 g/cm³. Beispiele für derartige Füllstoffe sind Zinkoxid (ZnO), Zinndioxid (SnO₂), Titandioxid (Titan(IV)-oxid, TiO₂), Eisenoxide - insbesondere Eisen(II)-oxid (FeO), Eisen(III)-oxid (Eisensesquioxid Fe₂O₃), Eisen(II,III)-oxid (Ferroferrioxid Fe₃O₄, Magnetit), Bariumsulfat (BaSO₄), Bleisulfat (Bleivitriol, PbSO₄), Aluminiumhydroxid, (z. B. in Form von Hydrargillit, Bayerit, Nordstrandit) oder auch Aluminiummetahydroxid (z. B. in Form von Diaspor oder Böhmit), Hafniumborid, Hafniumcarbid, Hafniumnitrid, Hafniumdioxid (HfO₂), Wolframoxide (z.B. Triwolframoxid (W₃O), Wolframdioxid (Wolfram(IV)-oxid, WO₂), Wolframtrioxid (Wolfram(VI)-oxid, WO₃)), Rheniumdioxid (ReO₂), Rheniumtrioxid (ReO₃) und Rheniumheptoxid (Re₂O₇).

Eine weitere Möglichkeit besteht darin, die entsprechenden Gesteins- oder Erzmehle als Füllstoff zu verwenden. Beispiele hierfür sind Dolomit, Kassiterit (Zinnstein, SnO₂), Wismutblende (Eulytin, Kieselwismut, Bi₄[SiO₄]₃), Wismutglanz (Bismuthinit, Bismutin, Bi₂S₃), Ilmenit (Titaneisen, FeTiO₃) sowie Granitgesteinsmehl.

Ganz besonders bevorzugt ist die Verwendung von Schwerspat, Eisenoxiden, Aluminiumhydroxiden oder deren Mischung.

Die einzusetzenden Füllstoffe haben einen Korngrößenbereich zwischen 0,01 und 5000µm, vorzugsweise zwischen 0,1 und 100µm, besonders bevorzugt 0,5 und 20µm.

Beispiele für Additive sind Schmelzklebstoffe und / oder Haftvermittler sowie Trennmittel.

Der erfindungsgemäß zu verwendende thermoplastische Compound enthält dabei vorzugsweise 10 bis 30 Gew.%, besonders bevorzugt 15 bis 25 Gew.%, thermoplastische Polymere, 70 bis 90 Gew.%, besonders bevorzugt 65 bis 85 Gew.%, Füllstoff(e) und 0 bis 10 Gew.%, besonders bevorzugt 1 bis 5 Gew.%, eines Schmelzklebstoffes, wobei die Summe der Bestandteile 100 Gew.% beträgt.

Das gefüllte thermoplastische Polymere und der Schmelzklebstoff können dabei jeweils in granulierter Form als Mischung oder Gemenge in dem Compound vorliegen. Alternativ können die Granulatteilchen des gefüllten thermoplastischen Polymers mit dem Schmelzklebstoff beschichtet sein.

Ein eventuelles Neigen zum Zusammenkleben oder Zusammenbacken der Granulatteilchen kann auch durch eine oberflächliche Behandlung der Granulatteilchen vermieden werden. Dazu werden die Granulatteilchen oberflächlich mit einem geeigneten Trennmittel beschichtet; dieses Trennmittel kann beispielsweise Talkum, pyrogene Kieselsäure, Molekularsiebpulver, Russ, Polyethylenpulver, Ethylenvinylacetatpulver oder ein anderes feinteiliges nichtreaktives Polymerpulver sein. Prinzipiell können auch bei leicht erhöhter Temperatur aufschmelzbare Trennmittel wie z. B. Wachse auf die Granulatoberfläche aufgesprüht werden.

Das gefüllte Granulat und der Schmelzklebstoff werden vor der Extrusion compoundiert und als Fertigfabrikat dem Anwender bereitgestellt. Alternativ werden das gefüllte Granulat und der Schmelzklebstoff separat an den Ort der Applikation gebracht und dort inline gemischt und dem Extruder zugeführt.

Das Zuführen des einsatzfähigen thermoplastischen Compounds zum Extruder kann durch Schwerkraft oder pneumatische Fördersysteme erfolgen. Unter pneumatischen Fördersystemen werden in diesem Zusammenhang Saug- und / oder Blasförderer verstanden.

Das Zuführen des thermoplastischen Compounds oder der Komponenten, enthaltend das gefüllte Granulat und den Schmelzklebstoff und / oder weitere Hilfsstoffe, erfolgt dabei vorzugsweise durch kontinuierliche gravimetrische oder volumetrische Dosierung derart, dass je nach Applikation ein definiertes Profil konstanter oder vorgegeben variabler Abmessungen direkt aus dem Extruder auf das zu beschichtende, ggf. vorgeheizte, Substrat aufgebracht wird. Alternativ können die Einzelkomponenten des Compounds mengengenau dem Extruder zugeführt werden.

Die Vorheizung des Substrates vor der Beschichtung auf eine definierte Temperatur kann dabei durch Infrarotstrahlung, Laserstrahlung, Heißluftzufuhr oder bei metallischen Substraten auch induktiv erfolgen. Die induktive Vorheizung kann dabei insbesondere dynamisch erfolgen, d. h. ein Sensor ermittelt die Substrattemperatur, diese wird dann mit einem vorgegebenen Sollwert verglichen, um daraus die notwendige Heizleistung der Induktionsheizung zu ermitteln und einzustellen. Vorzugsweise sind entsprechende Vorheizvorrichtungen direkt am Extruderkopf oder unmittelbar davor angebracht, so dass die Vorheizung zeitnah zur Beschichtung erfolgt.

Zur Beschichtung des Substrates müssen das zu beschichtende Bauteil und der Extruderkopf mit daran anmontierter Düse eine Relativbewegung zueinander ausführen. Dabei kann zur Erzeugung der Relativbewegung wie folgt vorgegangen werden:
- das Bauteil steht still und die Düse bewegt sich, oder
- sowohl Bauteil, als auch Düse bewegen sich, oder
- die Düse ist ortsfest und das Bauteil bewegt sich.

Die Erzeugung der Relativbewegung erfolgt vorzugsweise durch Manipulatoren. Manipulatoren im Sinne dieser Erfindung sind Geräte, die eine physikalische Interaktion mit der Umgebung ermöglicht. Im konkreten Fall ist dies der bewegliche Teil des Aufbaus, der die mechanische Arbeit des Extruderkopfes durchführt.

Für die Fälle der sich bewegenden Düse kann der eingesetzte Manipulator ein Roboter mit 5 oder 6 Dreh- bzw. Verschiebeachsen (rotatorische- bzw. translatorische Achsen) sein, wodurch die Kombination der einzelnen Bewegungen zu einer Gesamtbewegung zusammengefasst wird.

Dabei kann der Roboter den Extruder - samt Vorheizvorrichtung - tragen und die Relativbewegungen ausführen. Ähnliche Roboter sind beispielsweise in den Schriften US5358397, EP0787576 B1, DE10137214 A1 beschrieben.

Wenn sich sowohl Bauteil als auch Extruderdüse bewegen, ist der Manipulator vorzugsweise ortsfest neben einem Förderband angeordnet, wobei der Manipulator den darauf montierten Extruder oder die Extruderdüse nur entlang zweier zueinander orthogonaler Achsen bewegt. Das zu beschichtende Bauteil wird auf einer Fördervorrichtung horizontal an der Manipulatorstation vorbeigeführt, wobei diese Fördervorrichtung gegebenenfalls mit Führungsvorrichtungen quer zur Transportrichtung versehen ist, die Beginn und Ende der Extrusion des Beschichtungsmaterials steuern.

Wenn die Düse ortsfest angeordnet ist, wird das zu beschichtende Bauteil mit Hilfe eines geeigneten Roboters an der Düse des Extruders vorbeigeführt. Der Roboter hat dabei je nach Geometrie und Größe des zu beschichtenden Bauteils 2 bis zu 6 Dreh- bzw. Verschiebeachsen.

Gegebenenfalls werden die derart beschichteten Bauteile, vor der nachfolgenden Montage an oder in das Gerät oder die Maschine, unter Ausnutzung vorhandener Prozesswärme von Lackiervorrichtungen, vollständig ausgehärtet.

In einer weiteren Vorgehensweise wird das mit dem schalldämpfenden oder dämmenden Compound beschichtete Bauteil zunächst in das Gerät oder die Maschine eingebaut und die nachfolgende Prozesswärme, beispielsweise aus einer vorhandenen Lackiervorrichtung, wird zum endgültigen Aushärten des Compounds genutzt.

Weitere Merkmale und Einzelheiten des erfindungsgemäßen Verfahrens sollen nachfolgend anhand von Zeichnungen näher erläutert werden.

Es zeigen:
- Figur 1: eine mögliche Ausführungsform der Direkt Extrusionsvorrichtung
- Figur 2: einen vollständigen Aufbau zur Durchführung des erfindungsgemäßen Beschichtungsverfahrens von Bauteilen
- Figur 3: Detail zur Anordnung der Extrusionsdüse

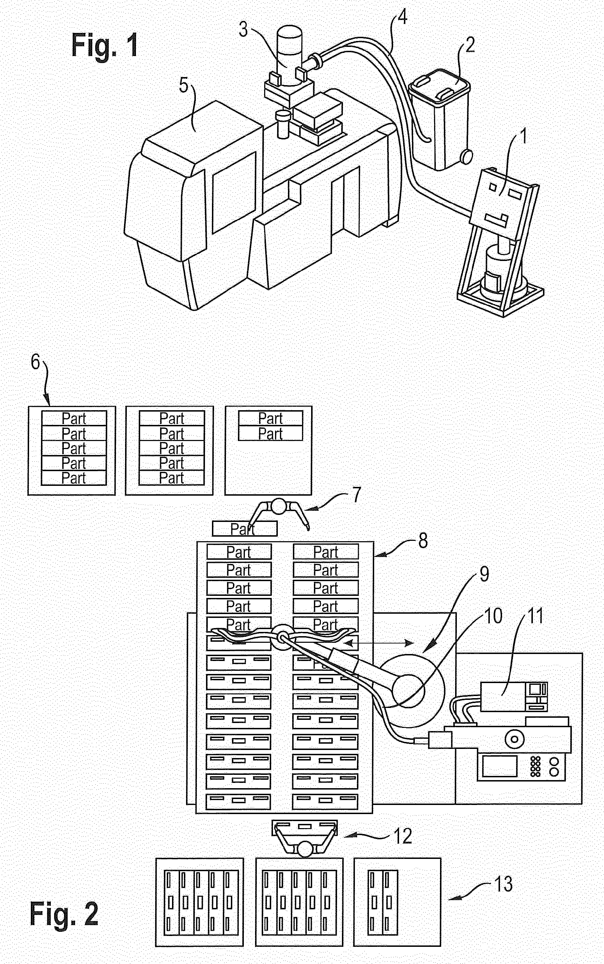

In der Figur 1 sind die wesentlichen Teile einer Direkt Extrusionsvorrichtung dargestellt. Die Gebläsestation 1 enthält unter anderem ein Filter zur Reinhaltung der Förderluft von Schweb- und Staubteilen. Die Förderluft dient dazu, das zu extrudiernde gefüllte Granulat aus dem Vorratsbehälter 2 über den Schlauch 4 in den Fülltrichter 3 des Extruders 5 pneumatisch zu transportieren. Aus dem Fülltrichter wird das Granulat, automatisch gesteuert, in der vorgegebenen Menge in den Extruder gefördert. Nicht sichtbar dargestellt ist die Extruderdüse und die Vorrichtung zum Positionieren der zu beschichtenden Bauteile.

Die Figur 2 zeigt eine Beschichtungsanlage bei der sich sowohl Bauteil, als auch Düse bewegen. Die Transportvorrichtung 6 führt die zu beschichtenden Bauteile ("part") aus dem Lager oder einer Vorbereitungsstation der Beschichtungsanlage zu. An der Stelle 7 werden die Bauteile der Fördervorrichtung 8 zugeführt. Dies kann, wie hier dargestellt, manuell erfolgen oder auch maschinell mit Hilfe geeigneter und bekannter Manipulatoren. Die Vorrichtung 8 bewirkt den Transport der Bauteile in horizontaler Richtung an die vorgegebene Beschichtungsstation 9, im dargestellten Fall ein ortsfester Manipulator oder Roboter mit z. B. 3 Dreh- bzw. Verschiebeachsen. Nicht sichtbar ist eine Vorrichtung zum Aufheizen des Bauteils. Im konkret dargestellten Fall trägt der Roboterarm nur die Extrusionsdüse, der bereits im Extruder 11 aufgeschmolzene Compound wird über die Schlauchverbindung 10 vom Extruder zur Extrusionsdüse am Ende des Roboterarms gefördert. Nach der Beschichtung werden die Bauteile zur Station 12 gefördert und an dieser Stelle auf ein weiteres Förderband zur Verpackung oder Weiterverarbeitung transportiert. In der Figur 2 ist die Zuführung der beschichteten Bauteile von der Fördervorrichtung 8 auf das Förderband 13 ebenfalls als manueller Vorgang dargestellt. Auch hier kann dies mit Hilfe geeigneter und bekannter Manipulatoren erfolgen.

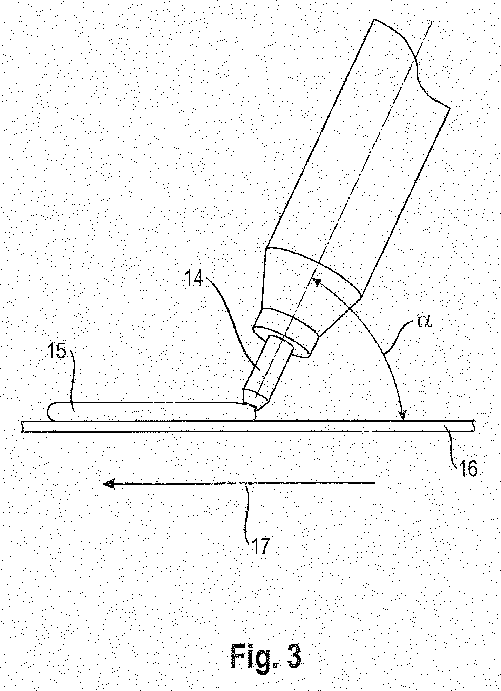

Die Figur 3 zeigt im Detail die Extrusionsdüse 14, die unter einem konstant gehaltenen Winkel α über das mit dem Compound 15 beschichtete Substrat 16 geführt wird. Dies ist wichtig, damit die vorbestimmte Beschichtungsstärke und Geometrie eingehalten werden kann. Der Pfeil 17 gibt die Relativbewegung des Bauteils 16 zur Düse 14 an.

Wie bereits vorstehend beschrieben, richten sich die konkrete Ausgestaltung sowohl der Fördervorrichtung als auch der Beschichtungsstation nach Größe und Geometrie der zu beschichtenden Bauteile. Wenn das zu beschichtende Bauteil beispielsweise ein kompletter Spülbehälter einer Waschmaschine, eines Geschirrspülers oder einer Gehäusekanzel ist, muss die Ausgestaltung der Fördereinrichtungen zur Zuführung der Bauteile zur Beschichtungsstation darauf abgestimmt werden. Auch der die Beschichtung ausführende Manipulator oder Roboter muss entsprechend ausgestaltet werden. Derartige Vorrichtungen sind bereits beispielsweise aus der Fahrzeugindustrie bekannt.

## Patentansprüche

1. Verfahren zum Schalldämmen und/oder Schallisolieren von metallischen Bauteilen und / oder Kunststoffbauteilen, **dadurch gekennzeichnet, dass** thermoplastische Compounds durch direkte Extrusion bei Schmelztemperaturen zwischen 120 und 300° C auf die Bauteile als definiertes Profil aufgebracht werden, wobei die Compounds vor der Erwärmung in Granulatform mit einer Dichte von 1,5 bis 5 g/cm³ vorliegen.

2. Verfahren nach Anspruch 1, **dadurch gekennzeichnet, dass** die Bauteile für Haushaltsgeräte oder Haushaltsmaschinen verwendet werden oder Bestandteil von Haushaltsgeräten oder Haushaltsmaschinen sind.

3. Verfahren nach Anspruch 1, **dadurch gekennzeichnet**, es sich bei den Bauteilen um Spülbecken, Badewannen, Duschwannen oder Duschtassen handelt.

4. Verfahren nach mindestens einem der vorhergehenden Ansprüche, **dadurch gekennzeichnet**, das die zu beschichtenden Substrate aus Edelstahl oder PVC-, Polycarbonat-, Polypropylen-, Acrylnitril-Butadien-Styrol- (ABS-) Polymeren oder Glasfaser-verstärkten Kunstoffen (GFK) bestehen.

5. Verfahren nach mindestens einem der vorhergehenden Ansprüche, **dadurch gekennzeichnet, dass** thermoplastische Compounds einen Füllstoffanteil von mindestens 60 Gew.% haben.

6. Verfahren nach mindestens einem der vorhergehenden Ansprüche, **dadurch gekennzeichnet**, das die thermoplastischen Compounds eine Mischung oder ein Gemenge eines mit anorganischen Salzen hoch gefüllten Ethylenvinylacetats (EVA), Polyamids oder Bitumens, mit einem Schmelzklebstoff auf Basis von Polyamid oder Polyolefinen enthalten.

7. Verfahren nach Anspruch 6, **dadurch gekennzeichnet**, das die thermoplastischen Compoundgranulate auf Basis von einem mit anorganischen Salzen hoch gefüllten Ethylenvinylacetat (EVA), Polyamid oder Bitumen, mit einem Schmelzklebstoff auf Basis von Polyamid oder Polyolefinen beschichtet sind.

8. Verfahren nach mindestens einem der vorhergehenden Ansprüche, **dadurch gekennzeichnet, dass**
- die anorganischen Salze ausgewählt werden aus Bariumsulfat, Aluminiumhydroxid und / oder Eisenoxiden und/oder
- die Compounds Dichten zwischen 2, 1 und 4,5 g/cm³ aufweisen und/oder
- die thermoplastischen Compounds bei Temperaturen zwischen 180 und 250° C aufgebracht werden.

9. Verfahren nach mindestens einem der vorhergehenden Ansprüche, **dadurch gekennzeichnet, dass** das gefüllte thermoplastische Polymer und der Schmelzklebstoff vor der Extrusion compoundiert werden oder, der Extrusion vorgeschaltet, inline dem Extruder als Einzelkomponenten zudosiert werden und erst im Extruder vermischt werden.

10. Verfahren nach mindestens einem der vorhergehenden Ansprüche 1 bis 9, **dadurch gekennzeichnet, dass** das zu beschichtende Bauteil und der Extruderkopf mit daran anmontierter Düse eine Relativbewegung zueinander ausführen, wobei
- das Bauteil still steht und die Düse sich bewegt oder
- sowohl das Bauteil als auch die Düse sich bewegen oder
- die Düse ortsfest ist und das Bauteil sich bewegt.

11. Verfahren nach mindestens einem der vorhergehenden Ansprüche, **dadurch gekennzeichnet, dass** das oder die Granulate durch Schwerkraft oder pneumatisch, vorzugsweise kontinuierlich volumetrisch oder gravimetrisch der direkten Extrusion zugeführt werden.

12. Verfahren nach mindestens einem der vorhergehenden Ansprüche, **dadurch gekennzeichnet, dass** der Extruder auf einem Manipulator oder einem Roboterarm montiert ist.

13. Verfahren nach mindestens einem der vorhergehenden Ansprüche, **dadurch gekennzeichnet, dass** das zu beschichtende Substrat durch Laserstrahlung oder vorzugsweise dynamisch induktiv vor der Beschichtung auf eine definierte Temperatur temperiert wird.

## Claims

1. Method for sound-proofing and/or sound-insulating metal components and/or plastics components, **characterized in that** thermoplastic compounds are applied to the components as a defined profile by direct extrusion at melting temperatures of between 120 and 300°C, wherein the compounds are in granular form and have a density of from 1.5 to 5 g/cm³ before being heated.

2. The method according to claim 1, **characterized in that** the components are used for domestic appliances or domestic machines or are components of domestic appliances or domestic machines.

3. The method according to claim 1, **characterized in that** the components are sinks, bath tubs, shower bases or shower trays.

4. The method according to at least one of the preceding claims, **characterized in that** the substrates to be coated are made of stainless steel or PVC polymers, polycarbonate polymers, polypropylene polymers, acrylonitrile butadiene styrene (ABS) polymers or glass-fiber-reinforced plastics materials (FRP).

5. The method according to at least one of the preceding claims, **characterized in that** thermoplastic compounds have a filler proportion of at least 60 wt.%.

6. The method according to at least one of the preceding claims, **characterized in that** the thermoplastic compounds contain a mixture or a solids mixture of an ethylene vinyl acetate (EVA) highly filled with inorganic salts, polyamide or bitumen, with a hot-melt adhesive based on polyamide or polyolefins.

7. The method according to claim 6, **characterized in that** the thermoplastic compound granulates based on an ethylene vinyl acetate (EVA) highly filled with inorganic salts, polyamide or bitumen are coated with a hot-melt adhesive based on polyamide or polyolefins.

8. The method according to at least one of the preceding claims, **characterized in that**
- the inorganic salts are selected from barium sulfate, aluminum hydroxide and/or iron oxides, and/or
- the compounds have densities of between 2.1 and 4.5 g/cm³, and/or
- the thermoplastic compounds are applied at temperatures of between 180 and 250°C.

9. The method according to at least one of the preceding claims, **characterized in that** the filled thermoplastic polymer and the hot-melt adhesive are compounded prior to the extrusion or, upstream of the extrusion, fed to the extruder inline as individual components and only then mixed in the extruder.

10. The method according to at least one of the preceding claims 1 to 9, **characterized in that** the component to be coated and the extruder head, together with the nozzle mounted thereon, move relative to one another,
- the component remaining still and the nozzle moving, or
- both the component and the nozzle moving, or
- the nozzle remaining stationary and the component moving.

11. The method according to at least one of the preceding claims, **characterized in that** the granulate(s) is/are supplied to the direct extrusion process by gravity or pneumatically, preferably continuously volumetrically or gravimetrically.

12. The method according to at least one of the preceding claims, **characterized in that** the extruder is mounted on a manipulator or a robot arm.

13. The method according to at least one of the preceding claims, **characterized in that** the substrate to be coated is tempered to a defined temperature prior to the coating process by laser radiation or preferably dynamically inductively.

## Revendications

1. Procédé pour l'insonorisation et/ou l'isolation acoustique de composants métalliques et/ou de composants en plastique, **caractérisé en ce que** les composés thermoplastiques sont appliquées sur les composants en tant que profil défini par extrusion directe à des températures de fusion entre 120 et 300 °C, dans lequel les composés se présentent avant le chauffage sous la forme de granulés ayant une masse volumique de 1,5 à 5 g/cm³.

2. Procédé selon la revendication 1, **caractérisé en ce que** les composants sont utilisés pour des appareils ménagers ou domestiques, ou qu'ils font partie intégrante d'appareils électroménagers ou domestiques.

3. Procédé selon la revendication 1, **caractérisé en ce que** les composants sont des bacs d'évier, baignoires, bacs de douche ou receveurs de douche.

4. Procédé selon au moins l'une quelconque des revendications précédentes, **caractérisé en ce que** les substrats à revêtir sont constitués d'acier inoxydable ou de polymères de PVC, de polycarbonate, de polypropylène, d'acrylonitrile-butadiène-styrène (ABS) ou de matière plastique renforcée de fibres de verre (FRP).

5. Procédé selon au moins l'une quelconque des revendications précédentes, **caractérisé en ce que** les composés thermoplastiques ont une teneur en charge d'au moins 60 % en poids.

6. Procédé selon au moins l'une quelconque des revendications précédentes, **caractérisé en ce que** les composés thermoplastiques contiennent une combinaison ou un mélange d'un éthylène-acétate de vinyle (EVA), d'un polyamide ou d'un bitume fortement chargé en sels inorganiques, avec un adhésif thermofusible basé sur du polyamide ou des polyoléfines.

7. Procédé selon la revendication 6, **caractérisé en ce que** les granulés de composé thermoplastique basés sur un éthylène-acétate de vinyle (EVA), un polyamide ou un bitume fortement chargé en sels inorganiques sont enduits d'un adhésif thermofusible basé sur du polyamide ou des polyoléfines.

8. Procédé selon au moins l'une quelconque des revendications précédentes, **caractérisé en ce que**
- les sels inorganiques sont choisis parmi le sulfate de baryum, l'hydroxyde d'aluminium et/ou des oxydes de fer et/ou
- les composés ont des masses volumiques comprises entre 2,1 et 4,5 g/cm³ et/ou
- les composés thermoplastiques sont appliqués à des températures comprises entre 180 et 250 °C.

9. Procédé selon au moins l'une quelconque des revendications précédentes, **caractérisé en ce que** le polymère thermoplastique chargé et l'adhésif thermofusible sont composés avant l'extrusion ou montés en série à l'extrusion, ajoutés de manière dosée en ligne à l'extrudeuse en tant que composant unique et ne sont mélangés que dans l'extrudeuse.

10. Procédé selon au moins l'une quelconque des revendications 1 à 9, **caractérisé en ce que** le composant et la tête d'extrudeuse exécutent un mouvement relatif avec la buse montée par la suite, l'un par rapport à l'autre, dans lequel
- le composant est à l'arrêt et la buse se déplace ou
- à la fois le composant et la buse se déplacent, ou
- la buse est fixe et le composant se déplace.

11. Procédé selon au moins l'une quelconque des revendications précédentes, **caractérisé en ce que** le ou les granulés sont alimentés à l'extrusion directe par gravité ou pneumatiquement, de préférence par volumétrie ou gravimétrie continue.

12. Procédé selon au moins l'une quelconque des revendications précédentes, **caractérisé en ce que** l'extrudeuse est montée sur un manipulateur ou un bras de robot.

13. Procédé selon au moins l'une quelconque des revendications précédentes, **caractérisé en ce que** le substrat à revêtir est chauffé par un rayonnement laser ou de préférence par induction de manière dynamique, à une température définie, avant le revêtement.
